# EUROPEAN PATENT APPLICATION

(11) **EP 1 016 982 A1**
(43) Date of publication of application: **05.07.2000**
(21) Application number: 98124868.5
(22) Date of filing: 30.12.1998
(51) Int. Cl.: G06F 17/22, G06F 17/30

(54) **Method and apparatus of processing semistructured textual data**

(71) Applicant: LION Bioscience AG, 69120 Heidelberg (DE)
(72) Inventor: Etzold, Thure, Cambridge CCB1 2DZ (GB); Coupaye, Thierry, F-38 920 Crolles (FR)
(74) Representative: Betten & Resch

(57) **Abstract**

A method of processing semistructured data, in particular semistructured textual data, to output data which is in accordance with a predetermined structure, wherein said semistructured data is structured into one or more elements according to a given syntax, the actual content of the syntax elements being variable and being called a token, said method comprising: extracting by means of an extractor ("parser") from said semistructured data one or more tokens, said parser being capable of returning at least one token in response to a respective specific command identifying the requested token by a token identifier, wherein said method further comprises: providing a sequence of commands and an associated data structure definition, both together being called a loader, said loader comprising the commands necessary to cause said parser to return the one or more tokens to be extracted; causing by said sequence of commands of said loader said parser to extract said one or more tokens from said semistructured data and further converting said extracted tokens into said predetermined data structure defined by said associated structure definition.

## Description

The present invention relates to a method and an apparatus of processing semistructured data, and in particular to the processing of semistructured textual data.

### Background of the invention

Recently the handling of semistructured data became more and more important, since due to the increased use of the Internet, the World-Wide-Web, and a lot of data bases the volume of data which has to be handled is drastically increasing. A lot of the data, which the user or any analysing software encounters is in the form of semistructured data.

Semistructured means that the data is not completely unstructured but has some implicit structure which is intrinsic to the data so that its structure is not explicit and therefore not exposed to the user or applications handling this data.

There is an overwhelming number of examples for semistructured data. The text of a book which is divided into chapters, each chapter containing information about different countries, may, for example, be regarded as semistructured textual data.

Other examples are the data sets contained in data banks which store biological or biochemical data, such as information about enzymes, DNA or protein sequences, or the like. All these data are mostly in the form of textual data, which means that there is no data schema in these data banks regarding the contents of the individual fields of entries in these databanks. Moreover, not even each data set or entry in such a databank contain the same fields, some of them for example have a field containing a certain information and the other ones have not. Often the contents of the fields themselves are unstructured and in the worst case contain the information in free text.

However, despite there not being present any classical data schema, there is an intrinsic structure, since, for instance, an enzyme data bank contains only specific data about enzymes and not completely arbitrary data from unrelated fields, such as, for example, market information, or biographic data. Therefore, the user may expect certain contents in these databases, and this is what we refer to as an intrinsic structure. The intrinsic structure may be regarded as a syntax, which determines in a more abstract manner the structure of the data. The syntax describes how the data is organised into substructures or elements, such that the data may be regarded as being constituted by a number of elements which themselves have a certain informational content.

One example may be the vast abundance of HTML pages which provide a lot of semistructured data, since some of these pages contain specific information in the form of tables, or are structured into paragraphs. HTML pages are just one variant of semistructured information the present invention intends to deal with.

A computer user or an application program may try to make use of the intrinsic structure and the information contained in these semistructured data.

One approach of making use of semistructured information from HTML pages of the world wide web is described in "J. Hammer, et al., Extracting Semistructured Information from the Web, Workshop on Management of Semistructured Data (Tucson, Arizona, May 1997), (In conjunction with PODS/SIGMOD)". To obtain certain information the user has to create a specification file which is a sequence of commands, where each command is of the form 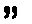 variables, source, pattern", where 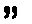 source" specifies the input text, 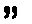 pattern" defines how to extract the text of interest (thereby reflecting the intrinsic structure of the data from which the text is to be extracted), and 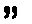 variables" specifies one or more variables where the extracted text is to be stored.

While the foregoing approach may provide the user with the data of interest, it has several disadvantages, in particular, it is neither efficient nor flexible and convenient to handle for the user who wishes to process semistructured data, as will become more apparent in the following.

It may for example be desirable for the user to easily get the desired information in different data formats, without having to take care of the intrinsic structure of the semistructured data itself.

One of the problems of the prior art approach to the management of semistructured data consists in the fact that the specification file has to reflect the syntax or the intrinsic structure of the data which is to be processed. Due to the great variety of the intrinsic structures of these data, the prior art therefore cannot provide a tool which makes it possible to manage semistructured data in an efficient and convenient manner by the user. This is particularly the case if the user not only wishes to extract specific data but also wants to convert the extracted data into a certain format or a certain data structure which is more suitable for further processing than the extracted raw data. The extracted data might for example be converted into objects of an object-oriented data base, or be converted into a data set matching a fixed data schema of a commercially available data bank or the like.

The problem thereby is that the specification file of the prior art has to reflect the intrinsic data structure of the semistructured data, which means that if a certain piece of information is to be extracted, the creator of such a file must know how this piece of information is embedded in the HTML page (the pattern). The specification file has to reflect the format and structure of the HTML page. It is necessary to specify the surrounding area of the desired piece of information, otherwise it is not possible to find and extract the desired piece of information from the web page. Therefore the person who writes the specification file must take into account and carefully consider the intrinsic structure of the semistructured data in order make sure that the correct information is extracted from the semistructured data. As a result, the specification file reflects the intrinsic structure (the syntax) of the data. For example, if a certain temperature value is to be extracted, it must be specified how this value can be found, for example, by defining the surrounding pattern of characters which surrounds the desired value.

Thereby it becomes quite complicated and tiresome to employ the method described in "Hammer et al.", since the step of extracting the data, as well as the step of converting the data into a specific format both not only needs to specify the result which is to be achieved but also has to carefully make considerations about the starting point, which means about the intrinsic structure of the data onto which the method is to be applied.

It is therefore an object of the present invention to provide a method and an apparatus for the processing of semistructured textual data which is much easier to handle, which provides the capability of extracting and converting semistructured data into a certain predetermined structure but which nevertheless does not pose the burden onto its user that he has to investigate and to carefully consider the intrinsic structure of the data to which the method and apparatus is to be applied.

It is a further object of the present invention to provide a method of processing semistructured data which can be easily adapted depending on the desired result of said method, more particular, depending on the format and structure of the desired output of said method.

It is a further object of the present invention to provide a method of processing semistructured data particularly suitable for the handling of semistructured data which is stored in one or more databanks, and in particular to the handling, managing, querying and linking of several databanks together.

It is furthermore an object of the present invention to provide a method of processing semistructured data which is highly flexible and adaptable depending on the input data as well as on the desired output.

### Summary of the invention

The objects of the present invention are achieved by employing a concept which is fundamentally different from the prior art.

In particular the present invention in one of its aspects provides a parsing mechanism together with a sequence of commands called a loader, and the loader causes the parsing mechanism to extract and return the specific piece of information the user is interested in. The parser has the capability of returning a plurality of specific pieces of information, namely the content of syntax elements of the semistructured data, in response to a request to return these specific pieces of information.

The loader makes use of this capability of the parser by causing the parser to return these specific elements, which we call tokens. With an appropriate loader, which is a sequence of commands and an associated definition of a data structure, the desired information can be extracted from the data to be processed and the extracted information is used to populate the defined data structure. The requested individual pieces of information, the tokens, are returned by the parser on request from the loader, and therefore the object of extracting data and converting it to a specific format can be much easier and more flexible be attained than in the prior art.

By amending or defining only the loaders, without the need to care about the syntax of the data to be processed, the user may very flexibly and efficiently get the data he is interested in a lot of different formats and output data structures.

Moreover the user can by means of the loaders easily define which pieces of information he actually is interested in.

By only amending the loaders there can be generated a different view of the semistructured data without actually knowing about the intrinsic structure of the data itself.

The parsing mechanism is capable of extracting a specific token by a corresponding token request. Token thereby means a character string which is the content of a syntax element of the text to be processed, the syntax element being identified by a token identifier specific for that syntax element. On request the parser returns the token identified by the token identifier.

A syntax element and its corresponding token may be hierarchically organized and may itself again be structured into sub-elements which contain certain pieces of information, the sub-tokens, which again are tokens and may be returned by the parser when requested which their corresponding token identifiers.

The so called loader is a sequence of commands and an associated data structure definition, both causing the parsing mechanism to return specific tokens and to further populate the associated data structure definition with the returned tokens.

With this basic approach the disadvantages of the prior art are avoided and several advantages come along with the employment of this new approach of processing semistructured data. By providing the parsing mechanism which returns a specific token as the content of a syntax element of the text to be processed just by requesting this token through its identifier, where the identifier may be an arbitrary sequence of characters which is characteristic for that specific token, the user has not to take care of the intrinsic structure of the data to be processed. He rather can focus on the result which he actually wishes to extract from the semistructured data.

By providing the concept of so-called loaders, which are sequences of commands and associated data structure definitions which use the parsing mechanism to return specific tokens and to populate the data structure with these tokens, the user of the present invention is free to focus on the result and the output he wishes to obtain, in terms of how the extracted data returned by the parsing mechanism is converted into a certain format or data structure, and he has not to take care any more about the intrinsic structure of the semistructured data as well as about how to extract the desired pieces of information. The parsing mechanism (hereinafter just called parser) in connection with the loaders gives the user a simple and efficient tool to process semistructured data. By amending only the loaders without caring about the intrinsic structure of the semistructured data the user can obtain results in a great variety easily

The processing can be split into a step of extraction and into a step of data conversion, and both steps are completely independent of each other. This becomes possible by employing said parser as an extraction mechanism based on identifiers for specific tokens, and by further embedding this extraction process (or this parsing mechanism) into a sequence of commands, the loaders, which make use of this extraction process and thereby convert the extracted data into a predetermined data structure.

By such a combination of a parser and said loaders, the method of the invention is capable of returning a vast plurality of output data structures in an easy and highly flexible manner, since for providing these highly variable output structures only the so-called loaders have to be amended, but for this amendment no care has to be taken of the input data and its corresponding structure itself. Lots of different loaders may be created which work together with said parser and provide different views on the processed input semistructured data. Merely by modifying the loaders it becomes possible to modify the returned result, despite the fact that this modification did not have to take into account the intrinsic structure of the input data itself.

With this basic concept several further advantages become possible. The loaders may for example be automatically generated based on loaders specifications which define the output of the method of the invention in terms of its structure.

Furthermore, these loaders specifications may be formed by employing the concept of inheritance, which means that a loader specification may inherit its attributes and its structure from an other one. This makes it very easy to create new output structures by making use of the work which has already be done when already existing loader specifications have been created.

The method is particularly suitable to be employed to output results of queries which have been performed on one or more biological or biochemical data banks, since the data sets therein mostly are semistructured data. While the data stored therein does not follow a specific data schema, it is nevertheless structured enough to make it feasible to create parsers which are capable of returning all tokens which may possibly be of some interest in response to a corresponding token request which identifies the requested token.

Since in these databanks the intrinsic structure is relatively foreseeable, there is therefore some kind of limitation to the total number of tokens which may possibly be of some interest, and therefore the method becomes particularly feasible for that field, since there is an a priori limitation to the capability necessary for the parsing means. There can be provided a parser which is capable of returning the contents of all syntax elements which could possibly be of interest to the user, and then it becomes possible with the method of the invention to handle these databanks in a much more flexible and efficient manner than in the prior art, since the user can concentrate on the loaders without having to deal with the structure of the input data.

The so-called loaders may also contain not only the commands necessary to induce the parser to return the specific tokens, but the loaders may also contain commands or information which are used to perform a link to other databanks, so that the output of the method of the invention is information which is extracted and converted from several rather than from one single databank.

Due to the flexible and easy to handle concept of the present invention, there are a lot of possible applications of the method of the present invention, such as converting databank entries into a lot of different formats, like DBMS relations or objects, C language structures, HTML reports, or the like. The extracted data may also be supplemented with data which is calculated by the loaders, thereby the output of the method of the invention not being dependent only on the extracted pieces of information but also on some processes or operations not directly related to these extracted pieces of information.

The present invention will be explained in more detail in the following in connection with several preferred embodiments of the invention and the accompanying drawing, in which:

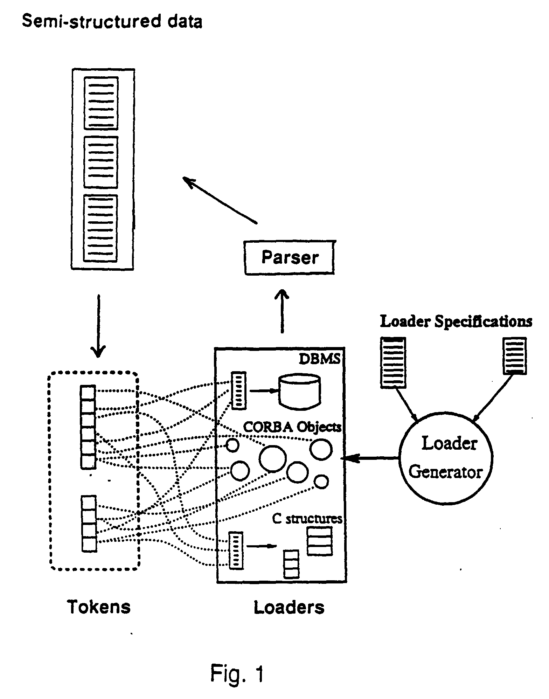

- Fig. 1: schematically illustrates the operation of a preferred embodiment according to the present invention.

### Description of the preferred embodiments

At first we give some definitions of the terminology used in the following in connection with the present invention.

When we speak of a loader, then we mean a sequence of commands and an associated data structure definition which causes a parser to return one or more specific tokens as the content of a syntax element of the input data. The sequence of commands of the loader requests these tokens and the parser executes the data extraction and returns the requested tokens.

When we speak of a syntax, then we mean the intrinsic structure of semistructured data which is composed of individual syntax elements. These elements may be, e.g., chapters of a book, titles of a text, fields of datasets of databanks, entries of databanks, or the like. The most general syntax element is the input text as a whole, this may then be split up into other elements which again may be split up into or be composed of other elements, and so on. Each syntax element may have a certain content which may itself be variable but which is categorised by the syntax element to which it belongs. A field in a databank may e. g. contain temperature data, then the syntax element would be the field temperature, the value stored therein would be what we call a token.

When we speak of a token, then we therefore mean a character string which is more or less arbitrary, the character string may also for example be empty. However, the character string which we call a token is identified by a specific token identifier which defines the category of the syntax element to which the specific token belongs. The token identifier may, e. g., be "name", the token itself "Hans Meier", and the syntax element could be the field in a databank which contains information about a person's name. This token identifier or token name can be used to cause a parser to return the specific token, by a command "get token (token name)".

When we speak of a parser, then we mean a mechanism or a method executable on a computer which parses an input text or an input sequence of characters as to whether this text or sequence of characters contains a certain syntax element identified by its corresponding token identifier, and which then returns the token forming the content of this specific syntax element on requesting it through the corresponding token identifier.If the parser finds the requested token belonging to a certain syntax element in the text which it parses, then the token is returned or output by the parser.

When we speak of a loader specification, then we mean a definition of what a loader actually should do in terms of which kind of output data structure it should provide. A loader specification in some sense defines the capabilities of a loader by defining which kind of data the loader should output. This can either refer to the fact that the loader specification specifies which syntax elements should be extracted by the parser, it may, however, also refer to how the extracted tokens should be converted into a specific format or data structure, or it may relate to both at the same time.

When we speak of a loader generator, then we mean a routine or mechanism which has as an input the loader specifications and has as an output the loaders. By providing a loader generator it becomes possible to automatically generate the loaders based on the loader specifications, thereby increasing the efficiency and variability of the system as a whole, since only the loader specifications have to be defined rather than the loaders itself having to be created.

When we speak of a data structure, then this term actually covers two possible meanings. The first meaning is that the data structure prescribes the actual format of the data, such as whether the data is in the form of an entry (in a database), a character string, a database object or something the like. The other possibility or the other possible meaning is that the data structure describes which kind of information the data actually contains, for example let us assume that the input data of the method of the invention contains information about three physical parameters, such as temperature, density and mass, and the output of the method of the invention e.g. contains only two of these pieces of information such as temperature and mass, then the term "Structure of the Output Data" relates to the question which kind of (or pieces of) information actually are contained in the data. During the following description the term data structure is usually intended to cover both possible meanings, whereas it depends on the particular embodiment and application which of the two possible meanings is actually realised, either the one, or the other, or even both of them.

In the following embodiment the present invention is applied to biological data banks as one example of a practical implementation of the method of the invention.

Let us assume that a query has been performed on the ENZYME databank. We describe in the following how an embodiment of the invention may be applied to such a query result, however, it is in principle also possible to apply it to HTML pages, or any other semistructured data. The example of the ENZYME databank is particularly suitable for explanatory purposes since the intrinsic structure of this databank shows individual fields having certain values thereby having a syntax comparatively easy to understand. It may, however, applied to any data the structure of which follows a certain syntax so that a parser can return the tokens which are the contents of the syntax elements.

As an example we describe the operation of the invention in connection with a biological databank which is called ENZYME. The ENZYME databank is a typical example of a databank comprising semistructured data.

A single entry in the ENZYME databank is composed of text lines with two uppercase letter line codes indicating the data-field. The entry is ended by a line containing only '//'. The line codes "ID", "DE", "CA", "CF", "CC" mark lines as belonging to the data-fields "Identification", "Description", "Catalytic activity", "Cofactor", "Comments", respectively.

As an example we show in the following two data sets (entries) returned as an output of a query performed for the ENZYME databank, which are listed below :
- ID: 3.4.24.49
- DE: Bothropasin.
- CA: CLEAVAGE OF 5-HIS-|-LEU-6, 10-HIS-|-LEU-11, 14-ALA-|-LEU1-5,
- CA: 16-TYR-|-LEU1-7 AND 24-PHE-|-PHE-25 IN INSULIN B CHAIN.
- CF: Zinc.
- CC: -!- Caseinolytic endopeptidase of jararaca snake (Bothrops jararaca)
- CC: venom.
- CC: -!- Belongs to peptidase family M12B.
- PR: PROSITE; PDOC00129;
- //:

- ID: 3.4.24.50
- DE: Bothrolysin.
- AN: Bothrops metalloendopeptidase J.
- AN: J protease.
- CA: CLEAVAGE OF 4-GLN-|-HIS-5, 9-SER-|-HIS-10 AND 14-ALA-|-LEU-15 OF INSULIN
- CA: B CHAIN AND PRO-|-PHE OF ANGIOTENSIN I.
- CC: -!- Endopeptidase from the venom of the jararaca snake (Bothrops
- CC: jararaca).
- CC: -!- Insensitive to phosphoramidon at 0.5 mM.
- CC: -!- Belongs to peptidase family M12B.
- PR: PROSITE; PDOC00129;
- DR: P20416, HRJ_BOTJA ;
- //:

The user, however, is only interested in specific fields contained in the data sets returned from the data banks, and for that purpose the user provides a loader which processes the above two data sets in a manner which returns an output data structure which only contains the information the user being interested in.

Let us assume that the user is only interested in the data fields "Description" and the data field "CoFactor" of the two data sets which resulted from the query.

Then a loader which performs a processing returning only these two pieces of information would for example look like the following:

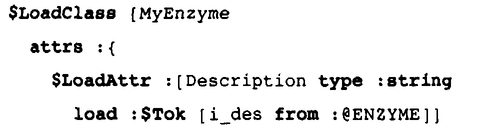

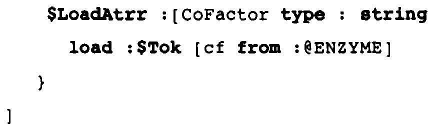

This loader would cause the parser to return the tokens which have the token identifiers "i_des " (Description) and "cf" (CoFactor).

If the above loader would for example be applied to the first ENZYME entry mentioned before, then the result would be as follows:
Description: "Bothropasin"
CoFactor: "Zinc"

Applying the loader for the second example of an ENZYME entry mentioned before would lead to a result which looks as follows:
Description: "Bothrolysin"
CoFactor: ""

The value of attribute "CoFactor" in the second object is an empty string since the second entry in the example does not have any line with the "CF" line code.

If, for instance, the chosen output format would be CORBA, textual entries would be converted into CORBA objects (which are not shown here) and the data would thus be available through the following generated IDL interface which can be generated through the loader generator:
interface MyEnzyme :Loader {
   readonly attribute string Description;
   readonly attribute string CoFactor;
}

As can be seen from the above example, it is very easy to output the query result in a specific format by employing the method of the present invention, since there is provided a parser which returns specific tokens and furthermore the loaders which cause this parser to return the specific token and convert the result into a predetermined format or data structure. Note that the field 〈〈 CoFactor 〉〉 is missing in the second entry (no line starting with 〈〈 CF 〉〉). However this would cause no error neither during the extraction process nor during the conversion process (the attribute 〈〈 CoFactor 〉〉 would return an empty string for the second entry). A loader may be executed on a text itself, without any databank query, it may be executed on the result of a query, or it may itself conduct a query on a databank. The loader may contain any additional commands and routines to provide the user with an output as suitable as possible for the demands of the user, such as his intentions for further processing of the result.

In order to employ the concept of a parser and associated loaders it is necessary to have a parser which is capable of returning the requested tokens on specific token requests only by identifying them through their token identifiers without having to care about the syntax of the data to be parsed. A parser which is capable of the aforementioned functions is for example described in http://srs.ebi.ac.uk/srs5/man/srsman.html, and therein in particular on http://srs.ebi.ac.uk/srs5/man/mi icarus.html. This chapter describes the language Icarus (Interpreter for Commands and RecUrsive Syntax) and how it can be applied to generate parsers, and it is included herein by reference.

Only by identifying the token by its name the parser is capable of returning the specific token, and therefore in connection with the loaders it becomes very easy for the user to extract and convert the desired data into a specific data structure.

It may be desirable not to have the tokens output by the parser just remaining unchanged, but to have them amended by the loader. This becomes possible by providing a loader which converts the extracted tokens into a specific other format, such that it for example matches with a database schema.

The loader may contain some commands which generate a database schema with empty datasets and then the loader may populate the so generated datasets or their data fields with the tokens returned by the parser. This can also be combined with some additional processing on either the extracted tokens themselves or on the resulting data structures, e. g. there may be inserted some additional information into the so generated output structures which comes from an external source, like from other databanks, or which is calculated or generated based on the returned tokens, such as additional information about the numbers of tokens received in total, the numbers received for specific token requests, the number of characters contained in the returned tokens, or the like.

The loader may also react differently depending on the tokens returned from the parser by evaluating the returned information. If a returned token is, e. g., a link information which makes reference to another databank or to a certain URL site, then the loader may open the site or query the databank to obtain additional information therefrom.

In an embodiment the method of the present invention may be applied to the processing of data which is distributed over several different databanks. In order to employ the method of the invention in that case the loader may for example contain a routine which checks whether the token returned from the parser in one databank contains a cross-reference, or link, to another one or more data entries from another databank. If such a link is detected, then the loader may issue a query on the other databank and extract the information, or tokens, from the linked entries from the other databank or databanks.

A loader therefore may be regarded as a sequence of a executable commands, where the core of the loader consists of the fact that the sequence of commands causes the parser to return at least one specific token. Based on this fundamental capability the loader further provides the functionality to convert the returned token or tokens into a predetermined data structure. For that purpose the loader may either create an empty data structure which is then populated with the token or tokens, another possibility could be that the loader itself contains the empty data structure which then is populated with the returned tokens.

In addition to these two basic functions a loader may provide the user with a lot of additional capabilities depending on the specific application, like the aforementioned linking capability, mathematical or other logical operations which are performed on the returned tokens or on the converted data, or the like.

In a further preferred embodiment of the invention the loader is automatically generated by a Loader Generator based on a loader specification.

This embodiment is schematically illustrated in Fig. 1. Based on the loader specifications the Loader Generator generates the loaders, which then cause the parser to return specific tokens from the semi-structured data. These tokens then are converted into the data structures provided by the loaders to form as a result the particular objects having a specific structure as desired by the user.

The loader specification defines which kind of syntax elements (or tokens) the user is interested in, and furthermore defines the data structure to be output, however on a more abstract level than the loader itself. It is e. g. possible to select or to create a loader specification based on a graphical user interface which provides the user with several options among which he can choose. He may then select the tokens he is interested in from a plurality of possible tokens which are offered to him by the interface. He may furthermore select the output structure, such as an OEM file, a HTML report, or the like, and the Loader Generator will then automatically generate the corresponding loader without it being necessary for the user to take care about the formal requirements of how to create a loader such that it works correctly. He rather may focus on what he actually wishes to obtain as an output.

By employing the inheritance concept it becomes very easy for the user to make use of the work which has already be done when creating loaders or loader specification, since one loader or loader specification may inherit its properties from another one.

The invention can be realised on a computer, e. g. by a method executed on that computer. It may be realised by an apparatus, which could be a computer adapted to act in accordance with the concept of the invention, or it may reside in a method executed on that computer which is realised by software engineering techniques. It may also be realised by a data storage device which embodies therein a code which causes a computer to act in accordance with the concept of the invention.

An apparatus according to an embodiment of the invention may for example be realized by a computer which is programmed such that it may be regarded as comprising means for carrying out the individual steps which form a method according to an aspect of the invention. Another aspect of the invention may consist in a data structure which results from executing a method according to the present invention. Such a data structure may be a simple data set or it may me a database or even a collection of several databases which result from carrying out a method according to an embodiment of the present invention. The data structure may be embodied in any medium which is readable by a computer, be it a storage medium or a communications link transmitting said data structure, e.g. through the internet.

The present invention may be put into practice either by means of software, such as a program running on a computer, or by means of hardware, such as by a special purpose computer specifically designed to operate according to the present invention, or by a combination of both of them.

## Claims

1. A method of processing semistructured data, in particular semistructured textual data, to output data which is in accordance with a predetermined structure, wherein said semistructured data is structured into one or more elements according to a given syntax, the actual content of the syntax elements being variable and being called a token, said method comprising:
extracting by means of an extractor ("parser") from said semistructured data one or more tokens, said parser being capable of returning at least one token in response to a respective specific command identifying the requested token by a token identifier, wherein
said method further comprises:
providing a sequence of commands and an associated data structure definition, both together being called a loader, said loader comprising the commands necessary to cause said parser to return the one or more tokens to be extracted;
causing by said sequence of commands of said loader said parser to extract said one or more tokens from said semistructured data and further converting said extracted tokens into said predetermined data structure defined by said associated structure definition.

2. The method according to claim 1, further comprising:
providing a loader specification to define the predetermined structure of the data which is output by said method;
automatically generating said loader based on said loader secification

3. The method according to claim 1 or 2, wherein said method automatically converts the data extracted from one or more databanks into a format specified by said predetermined structure.

4. The method according to one of claims 1 to 4, wherein said data stored in said data banks is semistructured textual data, and said predetermined structures are one of CORBA objects, DBMS relations or objects, C language structures, HTML reports, XML files, OEM files or prologue programs.

5. The method according to one of claims 1 to 4, wherein said predetermined structures are either predefined or interactively defined or chosen by a user.

6. The method according to one of claims 1 to 5, wherein said step of generating said predetermined data structure comprises one of the following:
generating static data structure definitions like database schemas, CORBA IDL objects, C types; or
generation of operations, like to load files, implementation of CORBA objects, C functions.

7. The method according to one of the preceding claims, wherein the predetermined structures can inherit from one another.

8. The method according to one of the preceding claims, wherein said generated method comprises:
linking entries extracted from one databank to one or several other linked databanks; and/or
creating or defining a link to another definition; and/or
computing one or more pieces of data to be returned rather than extracting it from the databank itself.

9. The method according to one of the preceding claims, wherein providing said definitions comprises
selecting one or more of predefined definitions; and/or
generating the definitions interactively by a user.

10. The method according to one of the preceding claims, further comprising:
accessing the data structures returned by said method for further processing, said further processing comprising one of the following:
visualizing the returned data structures;
amending the returned data structures by insertion or deletion of data;
querying the returned data structures;
converting the returned data structures into other data structures according to a given conversion scheme;
converting a complete databank into a given structure;
converting a single entry of a databank into a given structure;
retrieving data which gives meta-information about data banks and/or the returned data structures.

11. An apparatus for processing semistructured data, in particular semistructured textual data, to output data which is in accordance with a predetermined structure, wherein said semistructured data is structured into one or more elements according to a given syntax, the actual content of the syntax elements being variable and being called a token, said apparatus comprising:
extracting means ("parser") for extracting one or more tokens from said semistructured data by returning at least one token in response to a respective specific command identifying the requested token by a token identifier, wherein
said apparatus further comprises:
means for providing a sequence of commands and an associated data structure definition, both together being called a loader, said loader comprising the commands necessary to cause said parser to return the one or more tokens to be extracted;
means for causing by said sequence of commands of said loader said parser to extract said one or more tokens from said semistructured data and for further converting said extracted tokens into said predetermined data structure defined by said associated structure definition.

12. A computer readable medium for embodying or storing therein data readable by a computer, said medium comprising:
a data structure generated by executing a method according to any of claims 1 to 10.

13. A data structure readable by a computer, said data structure being generated by a method according to any of claims 1 to 10.

14. A computer readable medium for embodying or storing therein data readable by a computer, said medium comprising:
computer program code means which is adapted to cause a computer to execute a method according to any of claims 1 to 10.
